# EUROPEAN PATENT APPLICATION

(11) **EP 4 797 716 A1**
(43) Date of publication of application: **26.08.2026**
(21) Application number: 26160318.7
(22) Date of filing: 24.02.2026
(51) Int. Cl.: H04N 23/67, G06N 3/0464, G06V 10/82

(54) **INFORMATION PROCESSING APPARATUS, INFORMATION PROCESSING METHOD, NON-TRANSITORY COMPUTER-READABLE STORAGE MEDIUM, AND COMPUTER PROGRAM**

(30) Priority: 25.02.2025 JP 2025028237
(71) Applicant: Canon Kabushiki Kaisha, Tokyo 146-8501 (JP)
(72) Inventor: OGAWA, Shuhei, Ohta-ku, Tokyo, 146-8501 (JP)
(74) Representative: TBK

(57) **Abstract**

An information processing apparatus comprises an acquiring means for acquiring a plurality of pieces of input data having a first bit depth; a first converting means for converting the bit depth of a piece of input data to a second bit depth that is lower than the first bit depth; a second converting means for converting the bit depth of another piece of input data to the second bit depth, and extract features from data obtained by integrating the piece of data whose bit depth is converted to the second bit depth and the other piece of input data whose bit depth is converted to the second bit depth; and an extending means for extending the bit depth of the features to a third bit depth that is higher than the second bit depth.

## Description

### TECHNICAL FIELD

The present disclosure relates to a technology for converting the bit depth of data.

### BACKGROUND

In recent years, the accuracy of image recognition technologies such as image classification, object detection, and object tracking has dramatically improved with the advent of Deep Neural Networks (hereinafter abbreviated as DNN). Generally, the computational complexity of DNN operations is enormous, and memory usage is also high. Therefore, DNN calculations are often performed with a low bit depth, such as 8 bits. On the other hand, inputs and outputs of a DNN are sometimes required to have a high bit depth, such as 10 bits or 16 bits.

Japanese Patent Laid-Open No. 2023-81714 discloses a technology related to a neural network when the bit depth of data input to the neural network is larger than the bit depth handled by the neural network. This technology divides an input having a high bit depth into upper bits and lower bits to generate a low-bit input. A high-bit output is generated by inputting each divided portion of low-bit data into the neural network and concatenating the outputs from the neural network in the bit direction.

### SUMMARY

However, in the above-described method, during the calculation of one set of bits (e.g., lower bits), information of the other bits (e.g., upper bits) is lost, resulting in a significant decrease in the accuracy of the output. That is, in the above-described method, accuracy is significantly reduced by lowering the bit depth.

Therefore, the present disclosure provides a technology capable of suppressing a decrease in output accuracy even if the bit depth of input data is lowered.

The present disclosure in its first aspect provides an information processing apparatus as specified in claim 1. Optional features are specified in claim 2 to 16.

The present disclosure in its second aspect provides an information processing method as specified in claim 17.

The present disclosure in its third aspect provides a non-transitory computer-readable storage medium as specified in claim 18.

The present disclosure in its fourth aspect provides a program as specified in claim 19.

According to the present disclosure, it is possible to suppress a decrease in output accuracy even if the bit depth of input data is lowered.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram illustrating an overall configuration including main components of an image capturing apparatus according to embodiments.
FIG. 2 is a diagram of an imaging optical system for illustrating a defocus amount.
FIG. 3 is a block diagram illustrating a functional configuration of an image capturing apparatus according to a first embodiment.
FIG. 4 is a block diagram showing a functional configuration of a defocus range estimation unit.
FIG. 5 is a block diagram showing a functional configuration of an input data acquisition unit.
FIG. 6 is a flowchart of defocus range estimation processing according to the first embodiment.
FIG. 7 is a flowchart illustrating input data acquisition processing in S601.
FIG. 8 is a flowchart illustrating bit depth conversion processing in S602.
FIG. 9A is a flowchart illustrating input integration processing in S603, which is a flowchart of input integration processing by channel-wise concatenation.
FIG. 9B is a flowchart illustrating input integration processing in S603, which is a flowchart of input integration processing by concatenation in the spatial direction.
FIG. 9C is a flowchart illustrating input integration processing in S603, which is a flowchart of input integration processing by element-wise summation.
FIG. 10 is a diagram illustrating integration of inputs by channel-wise concatenation.
FIG. 11 is a diagram illustrating integration of inputs using spatial concatenation.
FIG. 12 is a diagram illustrating integration of inputs by element-wise summation.
FIG. 13 is a flowchart illustrating processing by a CNN for extracting features in S604.
FIG. 14A is a diagram illustrating a process of generating a BB map from input data, showing an image obtained by an image capturing apparatus imaging a person.
FIG. 14B is a diagram illustrating the process of generating a BB map from input data, showing an image in which BBs of parts and the whole body of the person detected from the image are superimposed.
FIG. 14C is a diagram illustrating the process of generating a BB map from input data, showing a defocus map, which is a map indicating a defocus amount of each region of the image.
FIG. 14D is a diagram illustrating the process of generating a BB map from input data, showing an example of the BB map.
FIG. 15A is a diagram indicating a defocus range for each part of a person 1401.
FIG. 15B is a schematic diagram showing estimated defocus ranges of the left eye, the right eye, the face, and the whole body of the person.
FIG. 16A is a diagram illustrating details of conversion of the bit depth of input data, illustrating conversion by a non-linear function corresponding to a first LUT applied in S6021.
FIG. 16B is a diagram illustrating details of conversion of the bit depth of input data, illustrating conversion by a non-linear function corresponding to a second LUT applied in S6022.
FIG. 17 is a flowchart illustrating bit depth extension processing in S605.
FIG. 18 is a flowchart illustrating another example of the bit depth extension processing in S605.
FIG. 19 is a diagram illustrating transition states of the bit depth extension processing.
FIG. 20 is a block diagram illustrating a functional configuration of a learning apparatus that learns defocus ranges.
FIG. 21 is a flowchart of learning processing for learning defocus ranges.
FIG. 22 is a block diagram illustrating a functional configuration of an image capturing apparatus according to a second embodiment.
FIG. 23 is a flowchart of noise reduction processing according to the second embodiment.
FIG. 24 is a flowchart illustrating bit depth conversion in S2401.
FIG. 25 is a diagram illustrating integration of images, which are pieces of input data.
FIG. 26 is a flowchart illustrating processing by a CNN for extracting features in S2403.
FIG. 27 is a diagram illustrating an example of integrating features and extending a bit depth in S2404.
FIG. 28 is a block diagram illustrating a hardware configuration of a system control unit included in an image capturing apparatus 10.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

The present embodiment describes a case in which a lens-interchangeable image capturing apparatus estimates defocus ranges in consideration of the spread of a subject in a depth direction and captures an image focused on the subject.

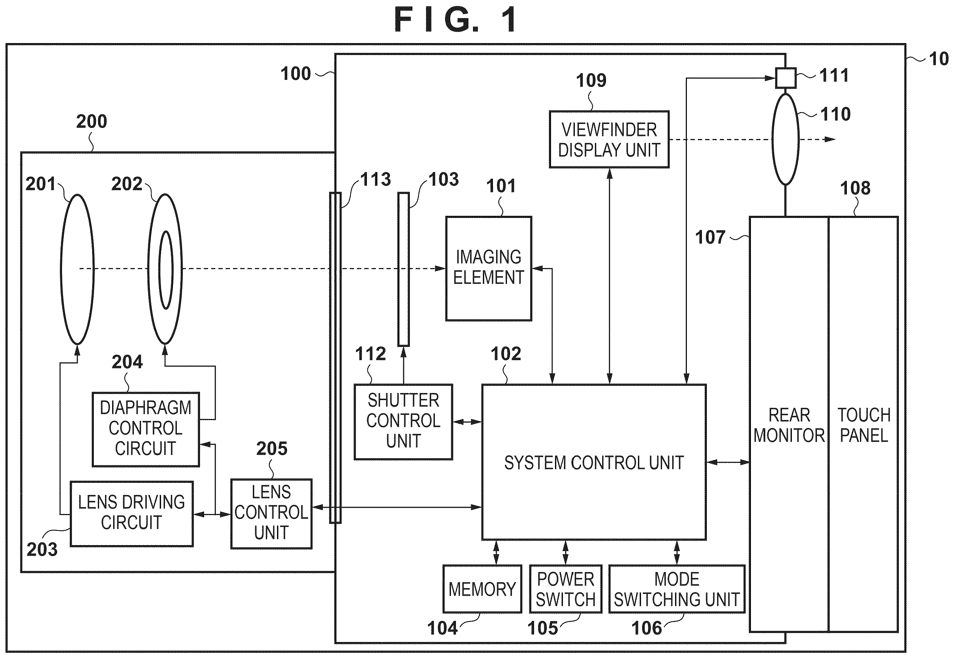

Hereinafter, the present embodiment will be described with reference to the drawings. FIG. 1 is a block diagram illustrating an overall configuration including main components of an image capturing apparatus 10. The overall configuration of the image capturing apparatus according to the first embodiment will be described with reference to FIG. 1.

As shown in FIG. 1, the image capturing apparatus 10 is, for example, a lens-interchangeable digital camera.

The image capturing apparatus 10 includes a camera body 100, a lens unit 200, and a lens mount mechanism 113. The camera body 100 is mechanically coupled to the lens unit 200 in a detachable manner and is also electrically connected thereto, with the lens mount mechanism 113 therebetween.

The camera body 100 includes an imaging element 101, a system control unit 102, a shutter 103, a memory 104, a power switch 105, a mode switching unit 106, a rear monitor 107, a touch panel 108, a viewfinder display unit 109, an eyepiece lens 110, and an eye proximity detection unit 111.

The imaging element 101 converts an optical signal, which is an optical image formed by light from a subject, into an electrical signal and outputs the electrical signal. The imaging element 101 may be an electronic device such as a complementary metal oxide semiconductor (CMOS) type image sensor or a charge coupled device (CCD) type image sensor.

The system control unit 102 controls the camera body 100 and incorporates a processor such as a well-known central processing unit (CPU). The system control unit 102 further includes an image processing unit for video signals obtained by the imaging element 101. The system control unit 102 further includes a phase difference AF unit that performs focus detection processing by a phase difference detection method based on focus detection image data (signals for phase difference AF) obtained from the imaging element 101 and the image processing unit. More specifically, the image processing unit generates a pair of image data formed using light fluxes passing through a pair of pupil regions of the imaging optical system as the focus detection image data. The phase difference AF unit detects a defocus amount based on a shift amount of the pair of image data. In this way, the phase difference AF unit according to the present embodiment performs phase difference AF (imaging plane phase difference AF) based on the output from the imaging element 101 without using a dedicated AF sensor.

The memory 104 stores programs, variables, constants, etc. for the operation of the system control unit 102. The memory 104 includes, for example, an electrically erasable and storable non-volatile memory. The memory 104 stores various parameters, setting values such as ISO sensitivity, shooting modes, various correction data, etc.

The power switch 105 accepts an operation from a user to switch the power of the camera body 100 on and off. The power switch 105 outputs the accepted operation to the system control unit 102.

The mode switching unit 106 accepts an operation from a user to switch between and set various shooting modes including a live view shooting mode, a moving image shooting mode, etc. The mode switching unit 106 outputs the accepted operation to the system control unit 102.

The rear monitor 107 has a display device, an LED, etc. The rear monitor 107 displays shooting information such as operation states and messages indicated by characters, images, sounds, etc., in accordance with execution of programs in the system control unit 102. The display device may be a liquid crystal display device, an organic electro luminescence (EL) display device, or the like.

The touch panel 108 is disposed on a display surface of the rear monitor 107. The touch panel 108 detects contact of a finger or a pen and notifies the system control unit 102 of a contact position on the rear monitor 107. Thereby, the system control unit 102 executes an operation or a function associated with the contact position.

The viewfinder display unit 109 displays shooting information in accordance with execution of programs in the system control unit 102 and constitutes an electronic viewfinder (EVF) together with the eyepiece lens 110.

The viewfinder display unit 109 is, for example, a small liquid crystal display device.

The eye proximity detection unit 111 detects an eye proximity state of a photographer and outputs the eye proximity state to the system control unit 102. The system control unit 102 displays the aforementioned shooting information on either the rear monitor 107 or the viewfinder display unit 109 according to the acquired eye proximity state.

Next, a configuration of the lens unit 200 will be described. The lens unit 200 guides incident light to the imaging element 101. The lens unit 200 includes a photographing lens 201, a diaphragm 202, a lens driving circuit 203, a diaphragm control circuit 204, and a lens control unit 205.

Although only one lens is illustrated for simplification, the photographing lens 201 may be a photographing lens group including a plurality of lenses. When a light ray from a subject is incident on the photographing lens 201, the photographing lens 201 forms an optical image of the light ray on the imaging element 101 via the diaphragm 202 and the shutter 103.

The lens control unit 205 controls the entire lens unit 200 based on instructions from the system control unit 102, etc. Specifically, the lens control unit 205 moves the photographing lens of the lens unit 200 in the optical axis direction, using the lens driving circuit 203, in order to focus on a specific subject. The lens control unit 205 controls the diaphragm 202, using the diaphragm control circuit 204, in order to adjust the depth of field and the light amount. The lens control unit 205 includes a memory that stores various constants, variables, programs, etc. for lens operation. The lens control unit 205 includes a non-volatile memory that holds a maximum aperture value, a minimum aperture value, a focal length, etc., which are pieces of information for controlling the lens unit 200.

The system control unit 102 of the camera body 100 calculates a defocus amount using output information from the imaging element 101. Subsequently, based on the calculated defocus amount, the system control unit 102 controls the lens driving circuit 203 by communicating through the lens control unit 205 of the lens unit 200, in order to achieve focus.

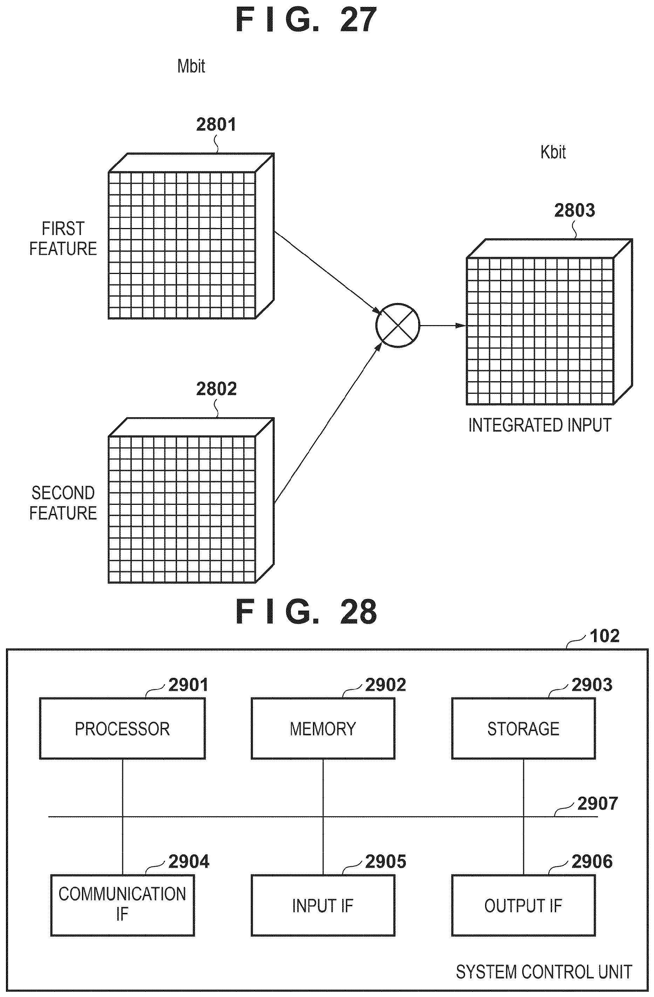

FIG. 28 is a block diagram illustrating a hardware configuration of the system control unit 102 included in the image capturing apparatus 10. The system control unit 102 is an example of a computer (also referred to as an information processing apparatus). The system control unit 102 includes a processor 2901, a memory 2902, a storage 2903, a communication IF 2904, an input IF 2905, an output IF 2906, and a bus 2907. The processor 2901, the memory 2902, the storage 2903, the communication IF 2904, the input IF 2905, and the output IF 2906 are connected to be able to transmit and receive information to and from each other via the bus 2907.

The processor 2901 is an arithmetic processing unit such as a central processing unit (CPU). Note that the system control unit 102 may include other processors such as a micro processing unit (MPU), a graphics processing unit (GPU), a neural processing unit (NPU), a quantum processing unit (QPU), etc., instead of the CPU or in addition to the CPU. The processor 2901 realizes various functions of the system control unit 102 by reading a computer program (hereinafter, also referred to as a program) stored in the storage 2903 and loading it into the memory 2902. Part or all of the functions of the system control unit 102 may be realized by one or more circuits such as an application specific integrated circuit (ASIC), a programmable logic device (PLD) including a field programmable gate array (FPGA), etc.

The memory 2902 corresponds to the memory 104 and is, for example, a storage device capable of high-speed reading and writing, such as a random access memory (RAM), etc. The memory 2902 functions as a work area when the processor 2901 executes a program. The memory 2902 temporarily stores the program and parameters required for execution of the program, etc.

The storage 2903 is, for example, a non-volatile storage device such as a hard disk drive (HDD), a solid state drive (SSD), etc. The storage 2903 holds the program, parameters required for execution of the program, results of execution of the program, etc., even when power is not supplied. The storage 2903 stores, for example, a trained model for extracting features (also referred to as feature values), model parameters, etc.

The communication IF 2904 is an interface for realizing communication with an external device via a wired or wireless network.

The input IF 2905 is an interface for accepting input of information from an input device such as the touch panel 108. The input device may be, for example, a mouse or a keyboard.

The output IF 2906 is an interface for outputting information such as images to the rear monitor 107, etc.

### Description of Method for Calculating Defocus Amount

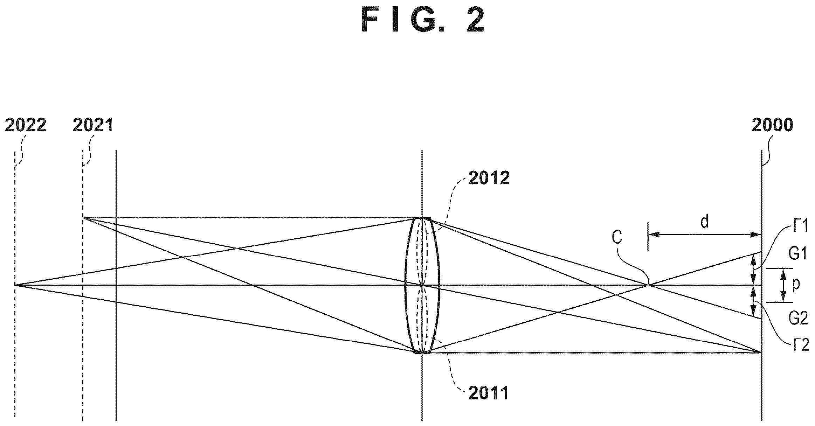

Here, a description will be given regarding a defocus amount used as depth information of an image in the present embodiment. FIG. 2 is a diagram of the imaging optical system for illustrating the defocus amount of the imaging optical system.

Specifically, FIG. 2 shows a relationship between the defocus amount and a phase difference (image shift amount) between a first focus detection signal and a second focus detection signal acquired from the imaging element.

An imaging plane 2000 is a plane on which the imaging element 101 is disposed. The exit pupil of the imaging optical system is divided into two regions, namely a first pupil region 2011 and a second pupil region 2012. The defocus amount d may be a distance from an imaging position C of light fluxes from a subject 2021 and a subject 2022 to the imaging plane 2000, or a magnitude of the distance (i.e., an absolute value of the distance). A defocus amount in a front focus state where the imaging position C is on the subject side relative to the imaging plane 2000 has a negative sign (d < 0). A defocus amount in a rear focus state where the imaging position C is on the side opposite to the subject relative to the imaging plane 2000 has a positive sign (d > 0). In an in-focus state where the imaging position C is on the imaging plane 2000, d = 0. The imaging optical system is in the in-focus state (d = 0) with respect to the subject 2021 and in the front focus state (d < 0) with respect to the subject 2022. The front focus state (d < 0) and the rear focus state (d > 0) are examples of a defocus state (|d| > 0).

In the front focus state (d < 0), a light flux passing through the first pupil region 2011 (or the second pupil region 2012) among light fluxes from the subject 2022 converges once and then spreads to a width Γ1 or a width Γ2 centering on a centroid position G1 (or a centroid position G2) of the light flux. Thereby, a blurred image is formed on the imaging plane 2000. This blurred image is received by each first focus detection pixel (or each second focus detection pixel) on the imaging element, and a first focus detection signal (or a second focus detection signal) is generated. That is, the first focus detection signal (or the second focus detection signal) is a signal representing a subject image in which the subject 2022 is blurred by the blur width Γ1 (or the blur width Γ2) at the centroid position G1 (or the centroid position G2) of the light flux on the imaging plane 2000.

The blur width Γ1 (or the blur width Γ2) of the subject image increases approximately in proportion to an increase in the magnitude |d| of the defocus amount d. Similarly, the magnitude |p| of an image shift amount p (= the difference G1 - G2 in centroid positions of the light fluxes) between the first focus detection signal and the second focus detection signal also increases approximately in proportion to the increase in the magnitude |d| of the defocus amount d. The relationship is similar in the rear focus state (d > 0), while the image shift direction between the first focus detection signal and the second focus detection signal is opposite to that in the front focus state.

In this way, as the magnitude of the defocus amount of the imaging signal increases, the magnitude of the image shift amount between the first focus detection signal and the second focus detection signal increases. Based on this relationship, the phase difference AF unit of the system control unit 102 performs focus detection using an imaging plane phase difference detection method for calculating a defocus amount from an image shift amount between the first focus detection signal and the second focus detection signal obtained using the imaging element 101. Specifically, the phase difference AF unit of the system control unit 102 converts the image shift amount into a detected defocus amount, using a conversion coefficient calculated based on a baseline length. Note that a product [Fδ] of an aperture F-value and a permissible circle of confusion diameter δ in the optical system of the image capturing apparatus at the time of image capturing is used as a unit of the defocus amount in the present embodiment.

### Functional Configuration of First Embodiment

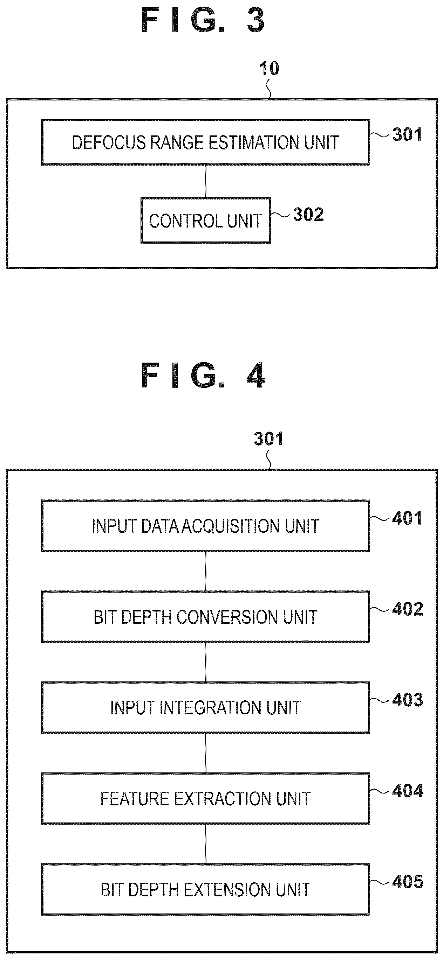

Hereinafter, the functional configuration and operation of the first embodiment will be described. FIG. 3 is a block diagram illustrating the functional configuration of the image capturing apparatus 10 according to the first embodiment. The image capturing apparatus 10 includes a defocus range estimation unit 301 and a control unit 302. The processor 2901 of the system control unit 102 may realize part or all of the functions of the defocus range estimation unit 301 and the control unit 302 by reading and executing a program. Part or all of the functions of the defocus range estimation unit 301 and the control unit 302 may be realized by a circuit such as an ASIC.

The defocus range estimation unit 301 estimates a defocus range of a subject. The defocus range may be a range of defocus amounts of the subject.

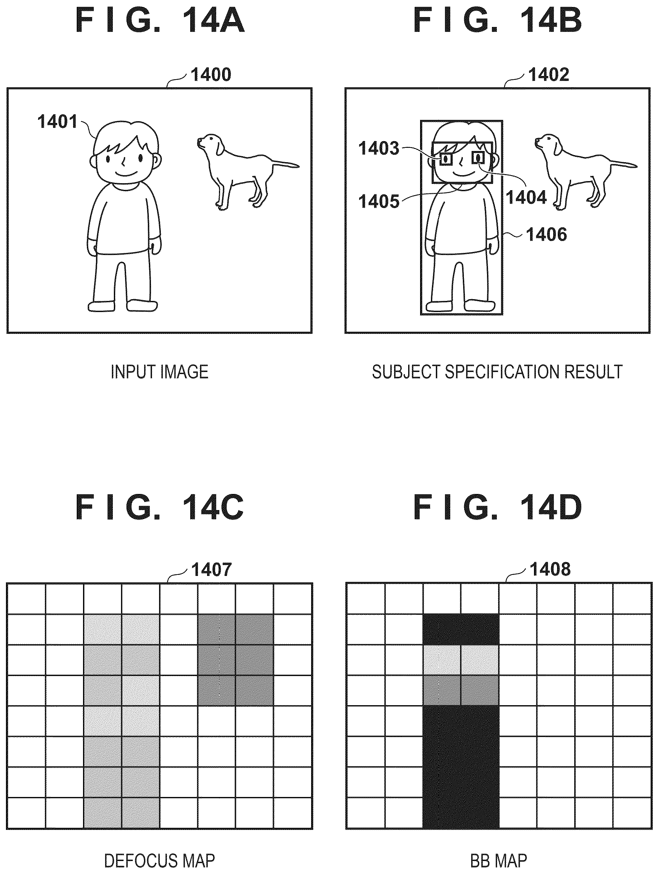

FIGS. 14A to 14D are diagrams illustrating the process of generating a BB map from input data. The input data is a diagram illustrating defocus of an image 1400 obtained by the image capturing apparatus 10 imaging a person 1401. FIG. 14A shows the image 1400 obtained by the image capturing apparatus 10 imaging the person 1401. FIG. 14C shows a defocus map 1407, which is a map indicating the defocus amount of each region of the image 1400. The defocus map 1407 may indicate the magnitudes of the defocus amounts by shading.

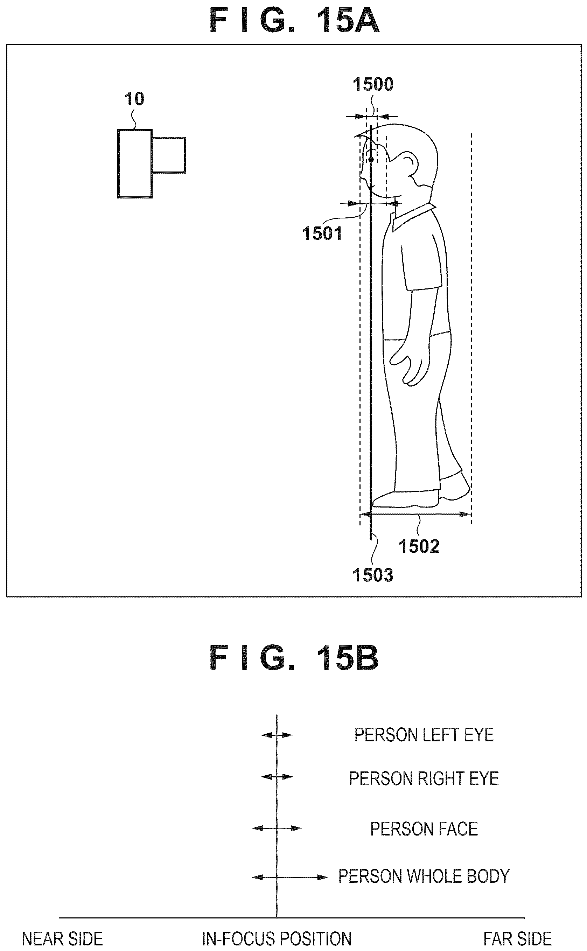

FIGS. 15A and 15B are diagrams illustrating the defocus ranges of parts of the subject. FIG. 15A is a diagram indicating the defocus ranges of parts of the person 1401. A defocus range 1500 indicates the defocus range of the left eye of the person. A defocus range 1501 indicates the defocus range of the face of the person. A defocus range 1502 indicates the defocus range of the whole body of the person. The defocus range 1500, the defocus range 1501, and the defocus range 1502 each visualize the spread of an object in the depth direction viewed from the image capturing apparatus 10. An in-focus position 1503 represented by a thick line indicates the in-focus position of the image capturing apparatus 10.

FIG. 15B is a schematic diagram showing estimated defocus ranges of the left eye, the right eye, the face, and the whole body of the person. The horizontal axis direction represents the magnitude of the defocus amount. The near side in the horizontal axis direction indicates the side closer to the image capturing apparatus 10. On the other hand, the far side in the horizontal axis direction indicates the side farther from the image capturing apparatus 10. The lengths of the arrows extending in the horizontal direction represent the defocus ranges, which are the value ranges of the defocus amounts of the parts.

As shown in FIG. 15A, for example, in the spread of the whole body of the person 1401 in the depth direction viewed from the image capturing apparatus 10, the nearest side is, for example, the tip of the nose of the person 1401. On the other hand, the farthest side is, for example, the heel of the person 1401. Therefore, the maximum value (the nearest value) of the defocus amount of the whole body of the person is the defocus amount of the tip of the nose of the person 1401, and the minimum value (the farthest value) of the defocus amount is the defocus amount of the heel of the person 1401. A value range defined by these values is the defocus range of the whole body of the person 1401.

In this way, the defocus range estimation unit 301 estimates the defocus range, which is the value range of defocus amounts, by taking into account the perspective relationship in the depth direction of estimation targets such as the eyes, face, and whole body of the subject.

The control unit 302 calculates the driving amount of the photographing lens 201 based on the defocus range estimated by the defocus range estimation unit 301 and controls the focus position. Further, in controlling the diaphragm 202, the control unit 302 adjusts the depth of field (DoF).

FIG. 4 is a block diagram illustrating the functional configuration of the defocus range estimation unit 301. The defocus range estimation unit 301 includes an input data acquisition unit 401, a bit depth conversion unit 402, an input integration unit 403, a feature extraction unit 404, and a bit depth extension unit 405.

The input data acquisition unit 401 acquires one or more pieces of input data necessary for estimating the defocus range. The input data includes, for example, data of an image obtained by imaging a subject (hereinafter, also referred to as an image), a defocus map, etc. A plurality of pieces of input data may have different bit depths.

The bit depth conversion unit 402 converts the bit depth of each of the one or more pieces of input data acquired by the input data acquisition unit 401. The bit depth conversion unit 402 may convert the bit depth of any of the plurality of pieces of input data. The bit depth conversion unit 402 converts, for example, the bit depth of the defocus map included in the input data to a lower bit depth.

When the bit depths of the pieces of input data are different, the bit depth conversion unit 402 may unify the bit depths by converting the higher bit depths.

The input integration unit 403 integrates a plurality of pieces of input data. The input integration unit 403 integrates, for example, the input data acquired by the input data acquisition unit 401 and the input data whose bit depth has been converted by the bit depth conversion unit 402.

The feature extraction unit 404 extracts one or more features (also referred to as feature values) from the input data whose bit depth has been converted and which has been integrated by the input integration unit 403. The feature extraction unit 404 may extract features, using a trained model based on machine learning, etc. The feature extraction unit 404 may extract features related to the defocus range.

The bit depth extension unit 405 extends and increases the bit depth of the data of the features extracted by the feature extraction unit 404. For example, the bit depth extension unit 405 extends the bit depth by integrating multiple features. For example, the bit depth extension unit 405 extends the bit depth of features related to the defocus ranges. The bit depth extension unit 405 may extend the bit depth of the features, which has been lowered by the bit depth conversion unit 402, to the same bit depth as the original input data.

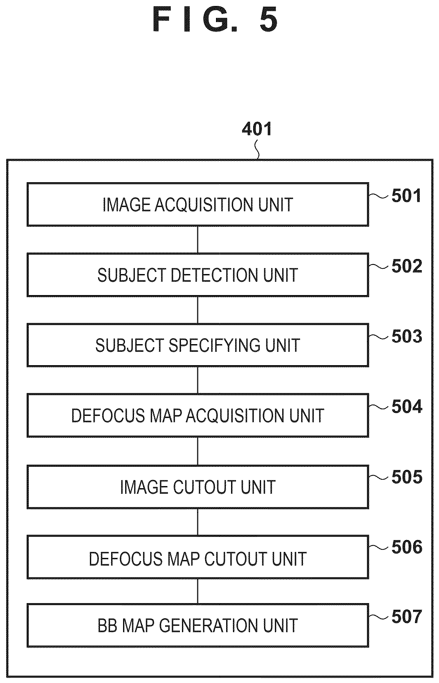

FIG. 5 is a block diagram illustrating the functional configuration of the input data acquisition unit 401. The input data acquisition unit 401 includes an image acquisition unit 501, a subject detection unit 502, a subject specifying unit 503, a defocus map acquisition unit 504, an image cutout unit 505, and a defocus map cutout unit 506.

The image acquisition unit 501 acquires an image captured by the image capturing apparatus 10. The acquired image is, for example, the image 1400 in which a person appears.

The subject detection unit 502 detects a subject from the image acquired by the image acquisition unit 501. The subject is, for example, a person. The subject detection unit 502 may detect an object such as a person as a subject from the image by adopting a technology such as Non-Patent Document 1 (Non-Patent Document 1: Liu and 6 others, "SSD: Single Shot Multibox Detector", In: ECCV2016). The subject detection unit 502 acquires a bounding box (hereinafter abbreviated as BB) indicating a region of the subject by, for example, object detection. Further, the subject detection unit 502 may detect the face, eyes, etc. of the person by adopting a technology such as Non-Patent Document 2 (Non-Patent Document 2: Jiankang Deng and 5 others, "RetinaFace: Single-stage Dense Face Localisation in the Wild", In: arXiv2019). FIG. 14B shows an image 1402 in which BBs of parts and the whole body of the person 1401 detected from the image 1400 are superimposed. A BB 1403 indicates the BB of the left eye. A BB 1404 indicates the BB of the right eye. A BB 1405 indicates the BB of the face. A BB 1406 indicates the BB of the whole body.

The subject specifying unit 503 specifies a subject to be focused on from among the detected subjects. With the subjects displayed on the rear monitor 107, the subject specifying unit 503 may specify the subject by accepting a touch from a user via the touch panel 108. Note that the subject specifying unit 503 may specify the subject by automatically detecting a main subject, etc. in the image, instead of by the touch on the touch panel 108. The subject specifying unit 503 may automatically detect a main subject in the image by, for example, a technology disclosed in Japanese Patent Laid-Open No. 2017-98900.

The defocus map acquisition unit 504 acquires a defocus map corresponding to the image captured by the image capturing apparatus 10.

The image cutout unit 505 cuts out a region where the subject appears from the image and resizes it to a predetermined size.

Similarly to the image cutout unit 505, the defocus map cutout unit 506 cuts out a region where the subject appears from the defocus map and resizes the defocus map to a predetermined size.

The BB map generation unit 507 generates a BB map based on the information of the BB of the subject obtained by the subject specifying unit 503. FIG. 14D shows an example of a BB map 1408.

In the BB map, predetermined values are input to regions indicated by the BBs of the parts and the whole body of the subject (e.g., the BB 1403 of the right eye, the BB 1404 of the left eye, the BB 1405 of the face, and the BB 1406 of the whole body). Note that the BB map does not need to be a single map, and each part of the subject may have a map.

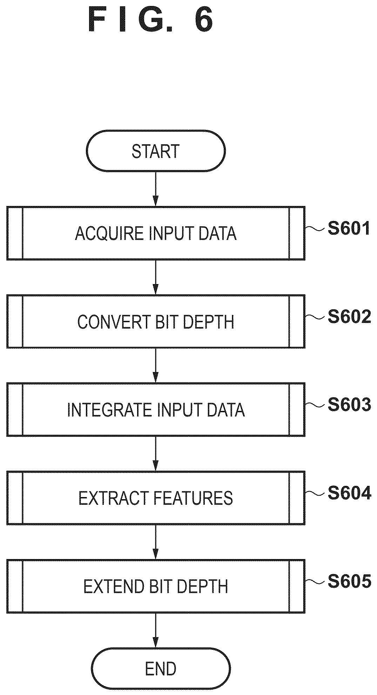

FIG. 6 is a flowchart showing a flow of defocus range estimation processing according to the first embodiment. In the following description, the notation of processes (steps) is omitted by adding S to the beginning of each process (step). However, the system control unit 102 of the image capturing apparatus 10 does not necessarily have to perform all of the steps described in the flowchart in FIG. 6. FIG. 6 shows processing executed by the system control unit 102 as steps.

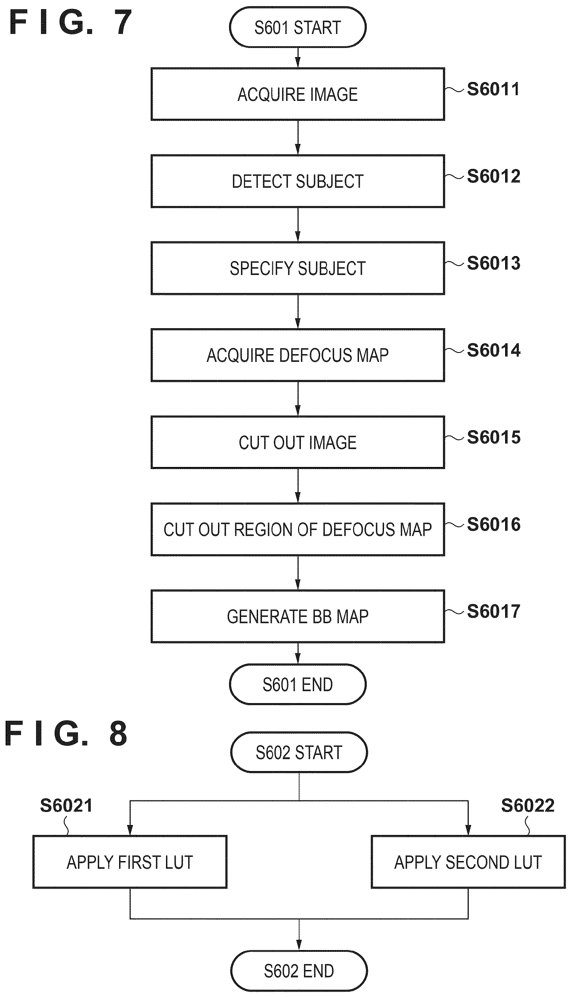

In S601, the input data acquisition unit 401 acquires input data (also simply referred to as inputs). The input data includes, for example, an image captured by the image capturing apparatus 10, a defocus map, etc. FIG. 7 shows a flowchart illustrating the input data acquisition processing in S601. Input data acquisition processing will be illustrated with reference to FIG. 7.

In S6011, the image acquisition unit 501 acquires a captured image.

In S6012, the subject detection unit 502 detects a subject in the image and acquires the BBs of the subject.

In S6013, the subject specifying unit 503 specifies a subject to be captured.

In S6014, the defocus map acquisition unit 504 acquires a defocus map corresponding to the captured image.

In S6015, the image cutout unit 505 cuts out a partial region of the image including the subject based on the BBs of the subject obtained in S6013, and resizes the image to a predetermined size.

In S6016, the defocus map cutout unit 506 cuts out a partial region of the defocus map including the subject based on the BBs of the subject obtained in S6013, and resizes the defocus map to a predetermined size.

In S6017, the BB map generation unit 507 generates a BB map as shown in FIG. 14D based on the BBs of the subject obtained in S6013.

Returning to FIG. 6, in S602, the bit depth conversion unit 402 converts the bit depth of the defocus map obtained in S6016. Here, the bit depth of the defocus map is assumed to be L bits (e.g., 16 bits). The bit depth of the image obtained in S6011 is assumed to be M bits (e.g., 8 bits). It is assumed that the feature extraction unit 404 can handle a bit depth of M bits. Also, it is assumed that L bits ≠ M bits. Specifically, L bits > M bits may hold. Thus, the bit depth of the image is M bits, which is the same as the bit depth that can be handled by the feature extraction unit 404. On the other hand, the bit depth of the defocus map is different from the bit depth of the image and is higher than the bit depth that can be handled by the feature extraction unit 404. Therefore, in S602, the bit depth conversion unit 402 converts the bit depth of the defocus map to a bit depth that can be handled by the feature extraction unit 404. In other words, the bit depth conversion unit 402 converts the bit depth of the defocus map to a lower bit depth. Also, it can be said that the bit depth conversion unit 402 unifies the bit depths of a plurality of pieces of input data having different bit depths.

FIG. 8 shows a flowchart illustrating the bit depth conversion processing in S602. With simple or uniform conversion of the L-bit defocus map to M bits by the bit depth conversion unit 402, information during quantization is lost. This may reduce the accuracy of defocus range estimation. Therefore, in S602, the bit depth conversion unit 402 applies at least one of a plurality of types of conversions to the conversion of the bit depth of the defocus map. The conversion here is, for example, a non-linear transformation. For example, in S6021, the bit depth conversion unit 402 applies a first LUT to convert the bit depth of the defocus map. In S6022, the bit depth conversion unit 402 applies a second LUT different from the first LUT to convert the bit depth of the defocus map. LUT stands for Look Up Table.

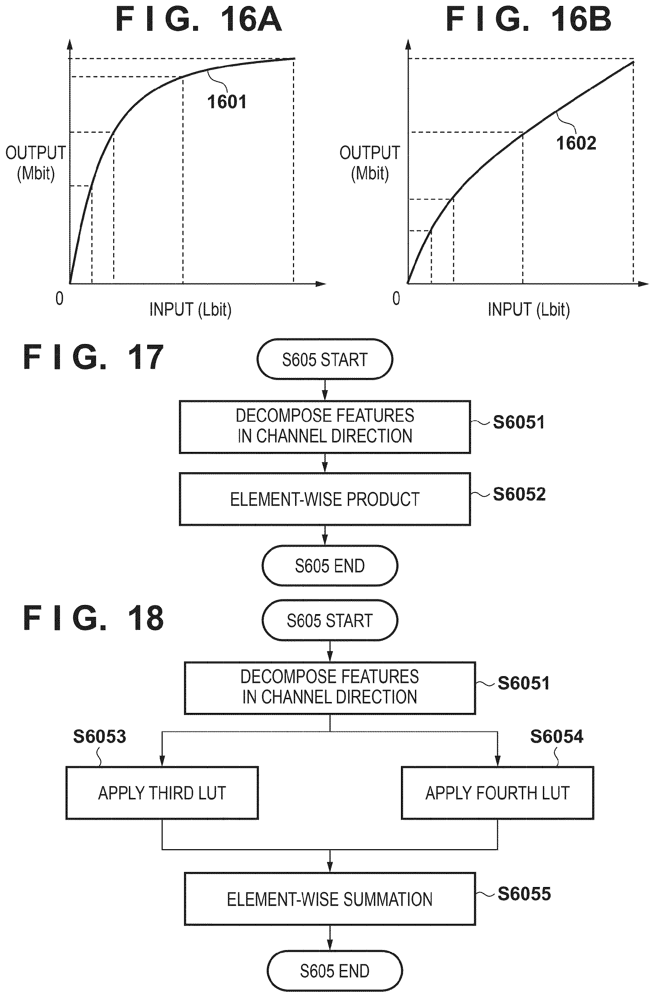

FIGS. 16A and 16B are diagrams illustrating details of the conversion of the bit depth of input data. FIG. 16A shows a conversion 1601 by a non-linear function corresponding to the first LUT applied in S6021. FIG. 16B shows a conversion 1602 by a non-linear function corresponding to the second LUT applied in S6022.

The bit depth conversion unit 402 reduces loss of information during quantization by applying a plurality of types of bit depth conversions different from each other. Furthermore, for the estimation of the defocus range, accuracy near the focal plane (near defocus value 0) is particularly important. Therefore, the bit depth conversion unit 402 converts the bit depth so that information of defocus values with small absolute values is less likely to be lost. The conversion 1601 increases the slope in a region where the absolute value of the defocus value is small, and decreases the slope in a region where the absolute value of the defocus value is large. Thereby, the conversion 1601 converts the bit depth so that information of defocus values near the focal plane is less likely to be lost. On the other hand, the change in slope of the conversion 1602 is smaller than that of the conversion 1601.

The bit depth conversion unit 402 may convert the bit depth using a LUT that is based on conversions 1601 and 1602. The number of bins of the LUT does not have to be L bits. For example, if an LUT with fewer bins than L bits is prepared, the bit depth conversion unit 402 may interpolate between bins by linear interpolation or the like. Also, if the defocus value is negative, the bit depth conversion unit 402 may calculate the absolute value of the defocus value, convert it to M bits using the LUT, and then assign a negative sign. When the bit depth conversion unit 402 adopts a plurality of conversions, the number of defocus maps increases as the number of conversions increases. For example, if the bit depth conversion unit 402 applies two types of conversions, conversion 1601 and conversion 1602, the number of defocus maps increases from one to two.

In the following description, the M-bit defocus map obtained by the conversion 1601 is referred to as a first defocus map. The M-bit defocus map obtained by the conversion 1602 is referred to as a second defocus map. Note that the conversion 1601, the conversion 1602, the conversion using the first LUT, and the conversion using the second LUT are examples of a first non-linear transformation.

Returning to FIG. 6, in S603, the input integration unit 403 integrates a plurality of pieces of input data. For example, the input integration unit 403 integrates the image and BB map acquired by the input data acquisition unit 401 with the first defocus map and second defocus map whose bit depths have been converted by the bit depth conversion unit 402. In other words, the input integration unit 403 unifies a plurality of pieces of input data whose bit depths have been unified by the bit depth conversion unit 402.

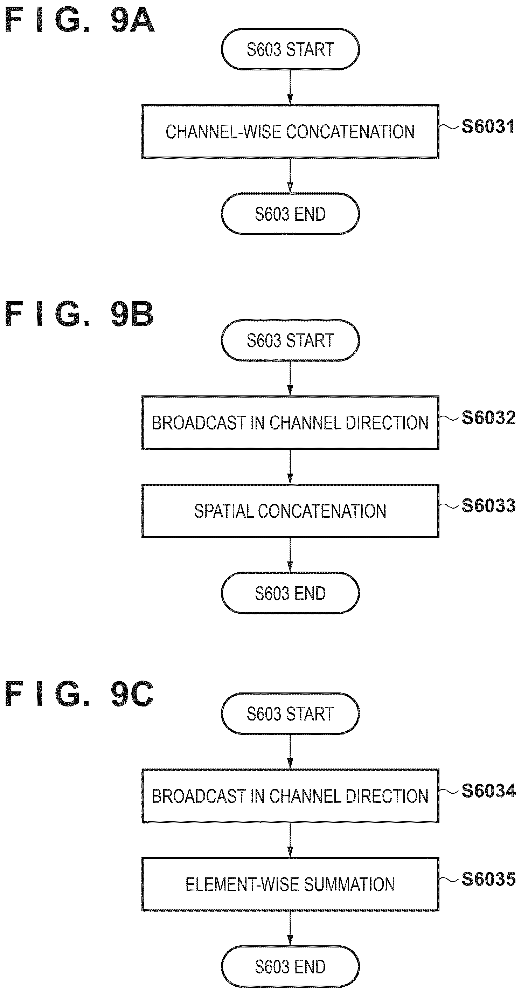

FIGS. 9A to 9C are flowcharts illustrating the input integration processing in S603. Hereinafter, multiple types of integration processing will be described with reference to FIGS. 9A to 9C.

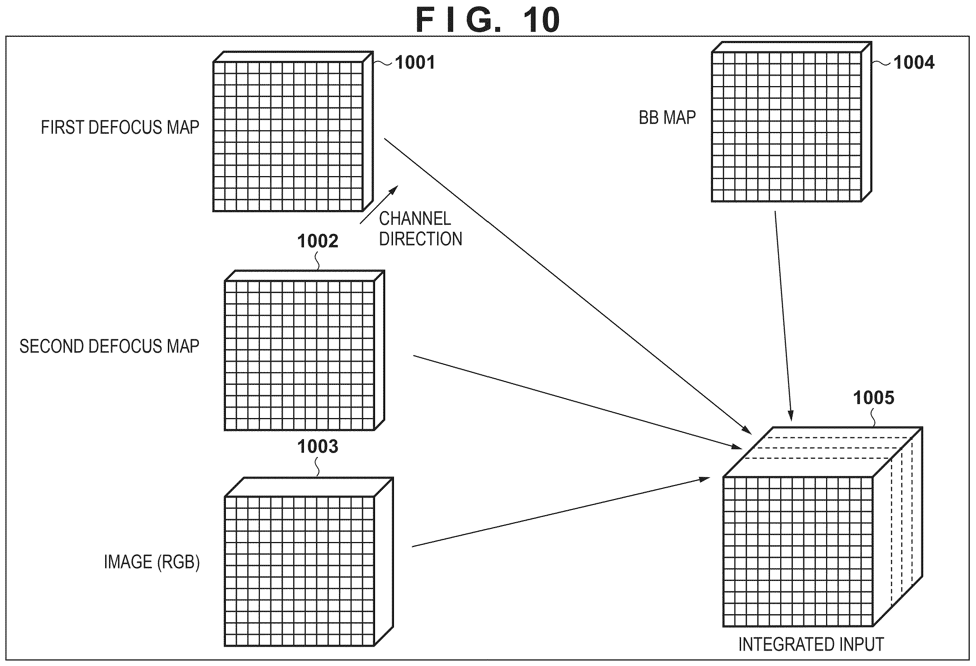

FIG. 9A is a flowchart of input integration processing by channel-wise concatenation. FIG. 10 is a diagram showing channel-wise integration of inputs. In S6031, the input integration unit 403 generates an integrated input 1005 by concatenating a first defocus map 1001, a second defocus map 1002, an image 1003, and a BB map 1004 in the channel direction. The integrated input 1005 can also be said to be an output of the input integration unit 403. The number of channels of the input 1005 is the sum of the number of channels of the first defocus map 1001, the second defocus map 1002, the image 1003, and the BB map 1004.

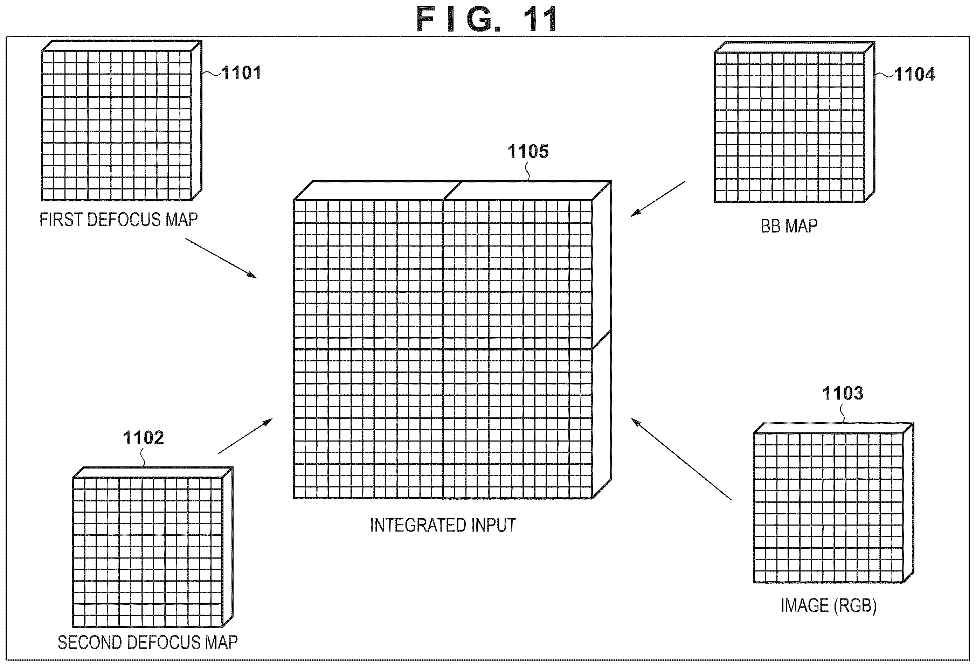

FIG. 9B is a flowchart showing input integration processing by concatenation in the spatial direction. FIG. 11 is a diagram showing integration of inputs in the spatial direction. In S6032, the input integration unit 403 matches the number of channels of the data by broadcasting a first defocus map 1101, a second defocus map 1102, an image 1103, and a BB map 1104 in the channel direction. In S6033, the input integration unit 403 concatenates the first defocus map 1101, the second defocus map 1102, the image 1103, and the BB map 1104 in the spatial direction to generate an integrated input 1105.

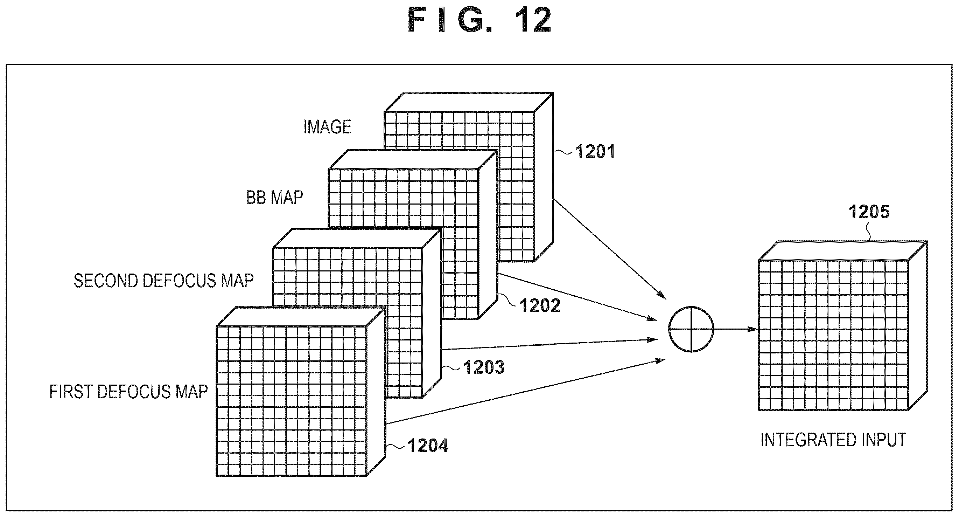

FIG. 9C is a flowchart of input integration processing by element-wise summation. FIG. 12 is a diagram showing integration of inputs by element-wise summation. In S6034, the input integration unit 403 matches the number of data channels by broadcasting the first defocus map 1101, the second defocus map 1102, the image 1103, and the BB map 1104 in the channel direction. In S6035, the input integration unit 403 combines a first defocus map 1204, a second defocus map 1203, an image 1201, and a BB map 1202 by calculating the element-wise sum to generate an integrated input 1205.

Returning to FIG. 6, in S604, the feature extraction unit 404 extracts features from the integrated input. The feature extraction unit 404 may use a convolutional neural network (hereinafter abbreviated as a CNN) or the like to extract feature values.

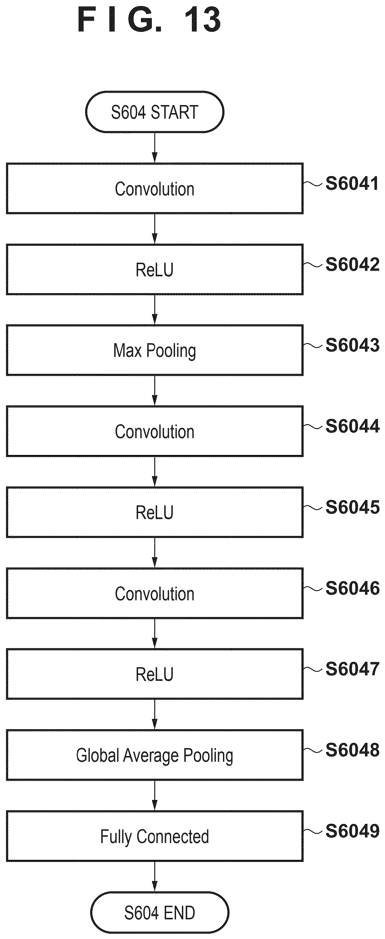

FIG. 13 is a flowchart showing processing by a CNN for extracting features in S604. The CNN includes processing by Convolution operations and non-linear operations such as ReLU and Max Pooling. The CNN may include a plurality of these elements. The CNN may include Global Average Pooling, Fully Connected, etc. The feature extraction unit 404 executes the Convolution in S6041, the ReLU in S6042, and the Max Pooling in S6043. Thereafter, the feature extraction unit 404 executes the Convolution in S6044 and the ReLU in S6045. The feature extraction unit 404 again executes the Convolution in S6046 and the ReLU in S6047. Note that the feature extraction unit 404 may repeat Convolution and ReLU three times or more. The feature extraction unit 404 executes the Global Average Pooling in S6048 and the Fully Connected processing in S6049 to extract feature values.

The feature extraction unit 404 may be a Multilayer Perceptron or a Multi-head Self Attention. The examples described above do not limit the feature extraction unit 404, and the configuration of the feature extraction unit 404 may be modified as appropriate.

The feature extraction unit 404 can calculate with a bit depth of, for example, M bits.

Note that the number of elements of the features output by the feature extraction unit 404 is a product of the number of parts for which the defocus range is estimated, the number of locations for acquiring the value of the defocus range, and the ensemble number N for integrating outputs described later, etc. For example, in the case of outputting for four parts including the left eye, the right eye, the face, and the whole body at two locations of near range and far range, and with an ensemble number of 2 at the time of integration, the feature extraction unit 404 outputs with the number of elements being 16 (= 4 × 2 × 2 = (number of parts) × (number of locations (= near, far)) × (ensemble number)).

Returning to FIG. 6, in S605, the bit depth extension unit 405 increases the bit depth of the features by extending the bit depth of the features acquired by the feature extraction unit 404, and outputs the estimated defocus range.

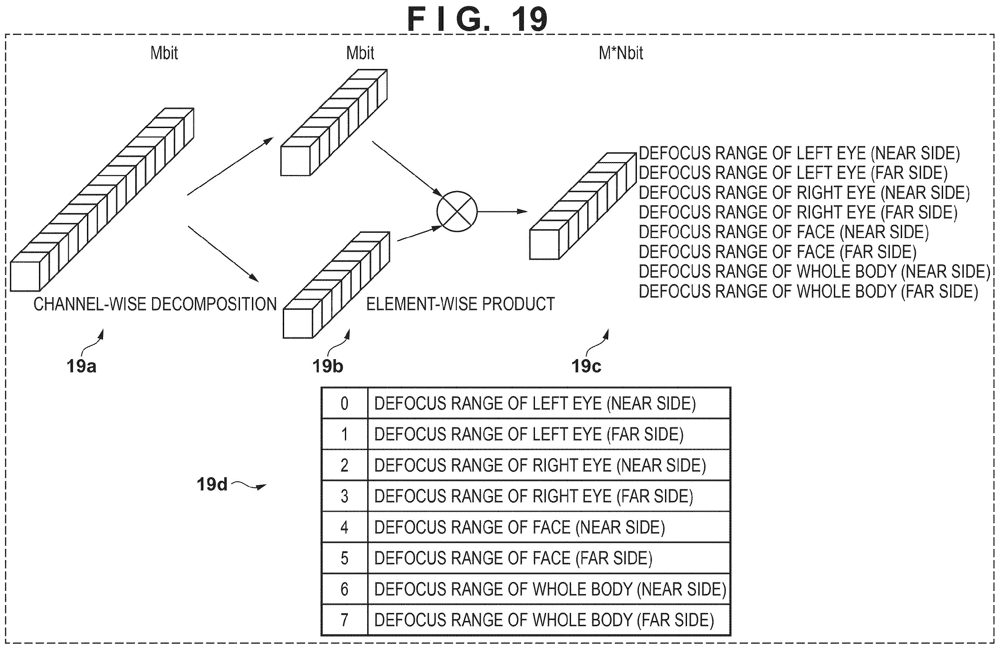

FIG. 17 is a flowchart illustrating the bit depth extension processing in S605. FIG. 19 is a diagram showing transition states of bit depth extension processing. Part (a) of FIG. 19 shows one or more M-bit features. Part (b) of FIG. 19 shows a state in which the M-bit features are decomposed into N groups of elements. Part (c) of FIG. 19 shows an output in which the decomposed elements are integrated using an element-wise product. Part (d) of FIG. 19 shows the values of the elements of the output feature values.

In bit depth extension processing, in S6051, the bit depth extension unit 405 decomposes the M-bit features shown in Part (a) of FIG. 19 extracted by the feature extraction unit 404 into a plurality of elements of N groups shown in Part (b) of FIG. 19 by decomposing them in the channel direction. N is the ensemble number at the time of integration and is determined in advance.

Next, in S6052, the bit depth extension unit 405 calculates the element-wise product of the decomposed features and integrates them to generate the output shown in Part (c) of FIG. 19. When the bit depth extension unit 405 integrates features using an element-wise product, the bit depth after the features are integrated is M bits × N bits. For example, if M is 8 and N is 2, the bit depth extension unit 405 obtains a 16-bit output. The elements of the output obtained in 16 bits correspond one-to-one to the near side and the far side of the defocus ranges of the parts desired to be output. As shown in Part (d) of FIG. 19, the 0th to 7th elements of the feature values indicate the defocus amounts of the near side and the far side of the parts in one-to-one correspondence. Note that the bit depth extension unit 405 may use the output obtained with M × N bits as it is, or may convert the bit depth of the output by bit shifting or the like as necessary.

FIG. 18 shows a flowchart illustrating another example of the bit depth extension processing in S605. The bit depth extension unit 405 may execute bit depth extension processing as shown in FIG. 18.

Specifically, in S6051, the bit depth extension unit 405 decomposes the M-bit features extracted by the feature extraction unit 404, in the channel direction.

In S6053 and S6054, the bit depth extension unit 405 applies a third LUT and a fourth LUT to the decomposed features. Here, the third LUT corresponds to the first LUT. The fourth LUT corresponds to the second LUT. For example, the conversion using the third LUT is an inverse conversion of the conversion using the first LUT. For example, the conversion using the fourth LUT is an inverse conversion of the conversion using the second LUT. The conversion using the third LUT and the fourth LUT is a non-linear transformation and is an example of a second non-linear transformation.

In S6055, the bit depth extension unit 405 integrates the features to which the LUTs have been applied, by calculating the element-wise sum, to generate an output. When M-bit of features are integrated by element-wise summation with an ensemble number of N, the number of bits of the output after integration is M + N bits. Note that the bit depth extension unit 405 may integrate features by calculating the element-wise average of the features instead of the element-wise sum.

Thus, in S605, the bit depth extension unit 405 can obtain the defocus ranges of the parts with increased bit depth through the extension. The bit depth extension unit 405 outputs the defocus ranges of the parts with increased bit depth to, for example, the control unit 302.

The control unit 302 can calculate the driving amount of the photographing lens 201 based on the obtained defocus ranges of parts of any given subject and control the focus position. Further, in the control (adjustment) of the diaphragm 202, adjustment of the depth of field (DoF) is executed. Since the defocus ranges are output with a bit depth greater than the M bits calculable by the feature extraction unit, finer adjustment of the driving amount of the lens is possible. As a result, the image capturing apparatus 10 can easily focus on any given subject part.

### Learning of Defocus Ranges

Next, a learning apparatus and a learning method for learning the defocus ranges of a subject will be described.

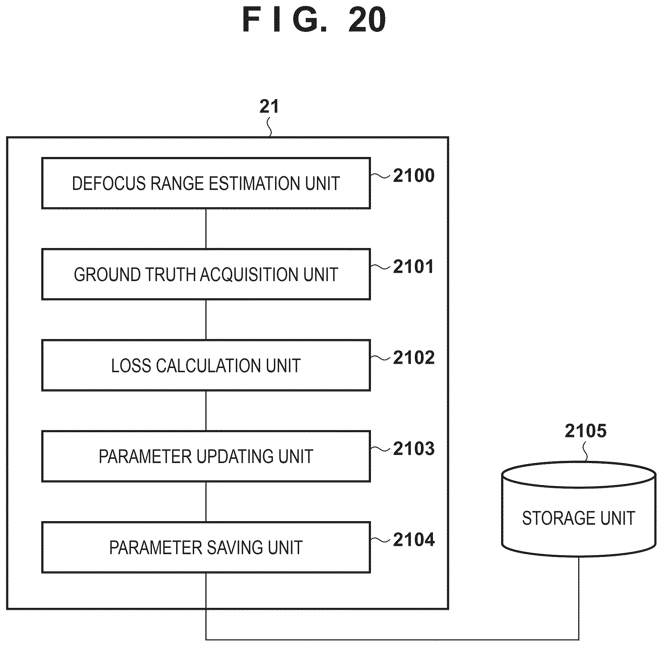

FIG. 20 is a block diagram illustrating a functional configuration of a learning apparatus for learning defocus ranges. A learning apparatus 21 may be provided in the image capturing apparatus 10 or may be separate from the image capturing apparatus 10. The learning apparatus 21 includes a defocus range estimation unit 2100, a ground truth acquisition unit 2101, a loss calculation unit 2102, a parameter updating unit 2103, a parameter saving unit 2104, and a storage unit 2105.

The defocus range estimation unit 2100 has the same functions as the defocus range estimation unit 301 at the time of inference. The defocus range estimation unit 2100 takes an image and a defocus map as input, estimates the defocus ranges of the parts of a subject, and outputs an estimation result. The estimation result can be said to be an output of the bit depth extension unit 405.

The ground truth acquisition unit 2101 acquires ground truth labels including predetermined ground truths of the defocus ranges of the parts of the subject.

As for the images prepared as training data and the defocus ranges serving as ground truth labels, values calculated as defocus amounts for each focus detection area from focus detection signals obtained at the same timing as the acquisition of the images may be adopted. For example, the image capturing apparatus 10 may calculate the defocus amount. Alternatively, an external arithmetic apparatus such as a computer may hold the focus detection signals and the image signals and calculate the defocus amount.

When associating the defocus range ground truth labels with an image, an appropriate range may be adopted as the ground truth of the defocus amount for each part of a subject by referring to the defocus amount of the region of the subject part in the image and the defocus amount of at least one of the background and foreground obstacles. A user may associate the ground truth labels of the defocus amount with an image while checking visually. Furthermore, values calculated for a region of each subject part, which is defined by the segmentation of the image and does not include background and foreground obstacles, and for a region where a focus detection area overlaps, may be adopted as the defocus ranges of the ground truth labels.

The loss calculation unit 2102 calculates a loss by comparing the estimation result output from the defocus range estimation unit 2100 with the ground truth labels acquired by the ground truth acquisition unit 2101.

The parameter updating unit 2103 updates parameters of the defocus range estimation unit 2100 based on the loss calculated by the loss calculation unit 2102.

The parameter saving unit 2104 saves the parameters of the defocus range estimation unit 2100 in the storage unit 2105.

When the image capturing apparatus 10 and the learning apparatus 21 are separate apparatuses, the image capturing apparatus 10 may update the parameters of the defocus range estimation unit 301 with the parameters of the defocus range estimation unit 2100.

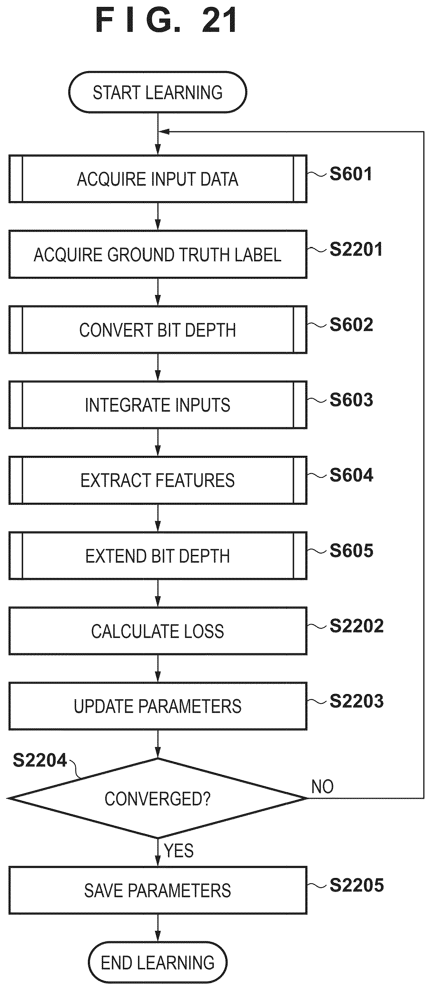

FIG. 21 is a flowchart of learning processing for learning defocus ranges. The flow of processing in S601 to S605 is the same as that at the time of inference. In learning processing, S601 is executed first.

In S2201, the ground truth acquisition unit 2101 acquires ground truth labels of the defocus ranges of the parts of a subject. The ground truth labels include the ground truth values of the defocus ranges on the near side and the far side of each part of the subject, as shown in FIG. 15B. Thereafter, S602 to S605 are executed.

In S2202, the loss calculation unit 2102 calculates a loss. The loss is calculated based on the estimated values of the defocus ranges obtained in S605 and the ground truth values of the ground truth labels of the defocus ranges acquired in S2201. The loss "Loss" can be obtained, for example, by the L1 norm shown in the following formula (1).$Loos = \frac{1}{N} {\sum }_{i}^{N} \left|{GT}_{i}^{max}-{D}_{i}^{max}\right| + \left|{GT}_{i}^{min}-{D}_{i}^{min}\right|$

Here, definitions of variables are as follows.
N: Number of parts of the subject $G {T}_{i}^{max}$ : Ground truth defocus value for the near side of the i-th part ${D}_{i}^{max}$ : Estimated defocus value for the near side of the i-th part $G {T}_{i}^{min}$ : Ground truth defocus value for the far side of the i-th part ${D}_{i}^{min}$ : Estimated defocus value for the far side of the i-th part

In S2203, the parameter updating unit 2103 updates the parameters of the defocus range estimation unit 2100 based on the loss calculated in S2201. The parameters may be a weight of an element such as Convolution in a neural network. The parameter updating unit 2103 may update the parameters based on the error back propagation method using Momentum SGD or the like.

In S2204, upon determining that the loss obtained by the loss calculation unit 2102 has converged, the parameter updating unit 2103 terminates the learning. Upon determining that the loss has not converged, the parameter updating unit 2103 returns to S601. The parameter updating unit 2103 may determine that the loss has converged when the loss falls below a certain value. The parameter updating unit 2103 may determine that the loss has converged when the number of repetitions from S601 to S2203 exceeds a predetermined number.

In S2205, the parameter saving unit 2104 saves the parameters of the defocus range estimation unit 2100. When the image capturing apparatus 10 and the learning apparatus 21 are integrated, the saving of the parameters of the defocus range estimation unit 2100 is equivalent to the saving of the parameters of the defocus range estimation unit 301. When the image capturing apparatus 10 and the learning apparatus 21 are separate apparatuses, the parameters of the defocus range estimation unit 301 are subsequently updated with the parameters of the defocus range estimation unit 2100.

Note that the subject does not necessarily have to be of only one type. Furthermore, the subject is not limited to a person, and may be multiple types of subjects including any of animals such as dogs and cats, and vehicles such as cars and trains. That is, the present embodiment does not limit the category and the number of types of the subject.

### Effects of First Embodiment

In the present embodiment, features are extracted after converting the bit depth of input data to a lower bit depth, and the bit depth of the features is extended. Thereby, the present embodiment can suppress loss of information of input data during conversion of the bit depth and suppress a decrease in accuracy of output features.

In the present embodiment, a plurality of features extracted by the feature extraction unit 404 are integrated using an element-wise product or the like. Thereby, the present embodiment makes it possible to convert the bit depth without separating the upper bits and the lower bits. Therefore, in the present embodiment, even when the bit depth that can be handled by the feature extraction unit 404 is lower than the bit depth of the input defocus map, it is possible to estimate the defocus ranges while suppressing a decrease in accuracy.

In the present embodiment, the bit depth of input data is converted to a lower bit depth by a non-linear transformation. Furthermore, the present embodiment extends the bit depth of the extracted features by a non-linear transformation. Thereby, since the present embodiment can suppress loss of information in an important range (for example, near the focal plane), it can further suppress degradation of output accuracy.

In the present embodiment, the non-linear transformation applied to the conversion of the bit depth to lower the bit depth may be, for example, an inverse transformation of the non-linear transformation applied to the extension of the bit depth to increase the bit depth. In this case, the present embodiment can further suppress loss of information caused by conversion of the bit depth.

In the present embodiment, the bit depths of a plurality of pieces of input data are unified by bit depth conversion that lowers the bit depths. Thereby, in the present embodiment, a plurality of pieces of input data can be easily integrated.

### Second Embodiment

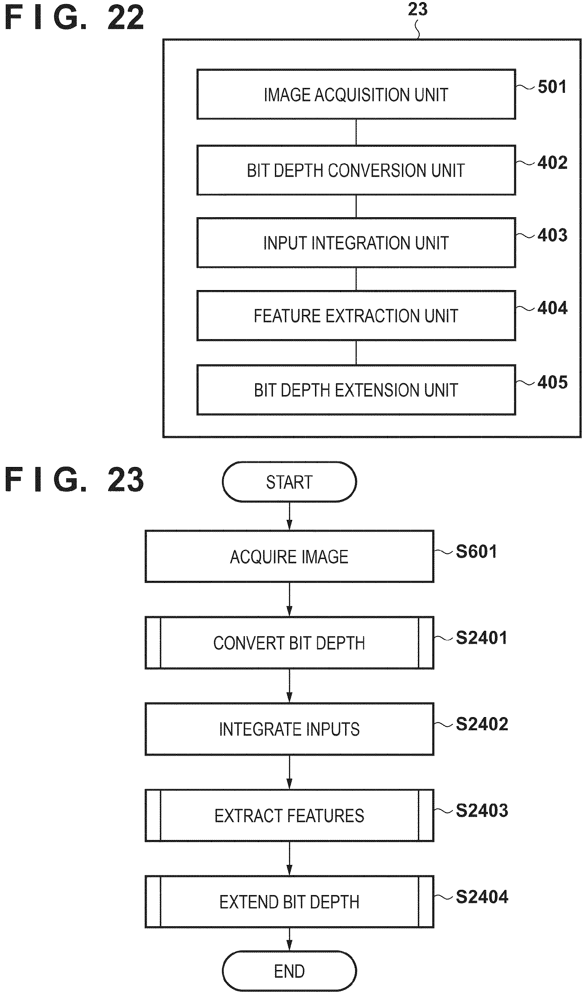

A second embodiment executes each task of noise reduction processing for reducing noise in an image. FIG. 22 is a block diagram illustrating a functional configuration of an image capturing apparatus according to the second embodiment. An image capturing apparatus 23 according to the second embodiment includes the image acquisition unit 501, the bit depth conversion unit 402, the input integration unit 403, the feature extraction unit 404, and the bit depth extension unit 405. Note that since the components according to the second embodiment have the same functions as those according to the first embodiment, the description is simplified.

The image acquisition unit 501 acquires an image captured by the image capturing apparatus 23 as input data.

The bit depth conversion unit 402 converts the bit depth of the image acquired by the image acquisition unit 501 and generates a plurality of images.

The input integration unit 403 integrates the images whose bit depths have been converted by the bit depth conversion unit 402.

The feature extraction unit 404 extracts features from the image obtained by the input integration unit 403.

The bit depth extension unit 405 integrates the features extracted by the feature extraction unit 404 and converts the bit depth.

Note that in the present embodiment, the bit depth of the image is N bits. It is assumed that the bit depth that can be handled by the feature extraction unit 404 is M bits. For example, N > M. It is assumed that the bit depth of the output obtained from the bit depth extension unit 405 is K bits.

FIG. 23 is a flowchart of noise reduction processing according to the second embodiment.

In S601, the image acquisition unit 501 acquires input data including an image obtained by imaging a subject.

In S2401, the bit depth conversion unit 402 applies a plurality of different functions to the input data including the N-bit image and then quantizes it to convert, for example, the bit depth of the image to M bits lower than N bits.

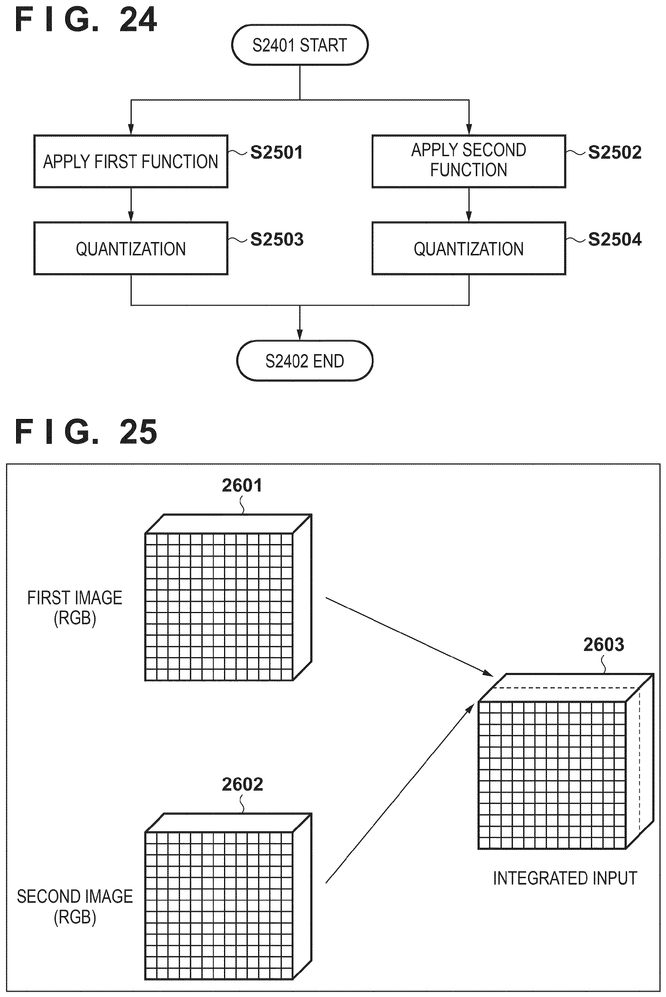

FIG. 24 is a flowchart illustrating the bit depth conversion processing in S2401. In S2501, the bit depth conversion unit 402 applies a first function, which is a non-linear function, to the image. In S2502, the bit depth conversion unit 402 applies a second function, which is a function different from the first function and is a non-linear function, to the image. The non-linear function may be, for example, a function shown in Formula (2).$y \left(x\right) = βsign \left(x\right) \left(1-exp\left(-α\left|x\right|\right)\right)$

Here, x is an input pixel value. α and β are each a predetermined parameter. The sign (·) is a function that returns the sign of input data. The first function and the second function have mutually different values for α and β. Therefore, the bit depth conversion unit 402 can realize different bit depth conversions for the image by applying the first function and the second function having different parameters α and β to the image.

In S2503, the bit depth conversion unit 402 quantizes the pixel values of the image converted in S2501. In S2504, the bit depth conversion unit 402 quantizes the pixel values of the image converted in S2502. Thereby, the bit depth conversion unit 402 converts the bit depth of the image to a lower bit depth and generates two types of data different from each other.

Note that in S2501 and S2502, although the bit depth conversion unit 402 applies two functions as a plurality of different conversions, the types and the number of functions to be applied are not limited. Furthermore, the bit depth conversion unit 402 may apply mutually different LUTs instead of the functions. The LUTs are generated based on, for example, values of the first function and the second function. Parameters of the functions and values of the LUTs may be determined by learning for noise reduction.

Next, in S2402, the input integration unit 403 integrates the M-bit images acquired by the image acquisition unit 501 in S2501. Integration may be performed by the same method as in the first embodiment. For example, the integration may be performed by concatenating M-bit images in the channel direction.

FIG. 25 is a diagram illustrating integration of images, which are pieces of input data. An image 2601 and an image 2602 in FIG. 25 are the plurality of M-bit images obtained in S2401. An integrated input 2603 shows a state in which the image 2601 and the image 2602 are integrated in the channel direction. In other words, the integrated input 2603 can be said to be an output of the input integration unit 403.

Next, in S2403, the feature extraction unit 404 extracts features from the image of the integrated input. The feature extraction unit 404 may use a convolutional neural network (hereinafter abbreviated as a CNN) or the like to extract features.

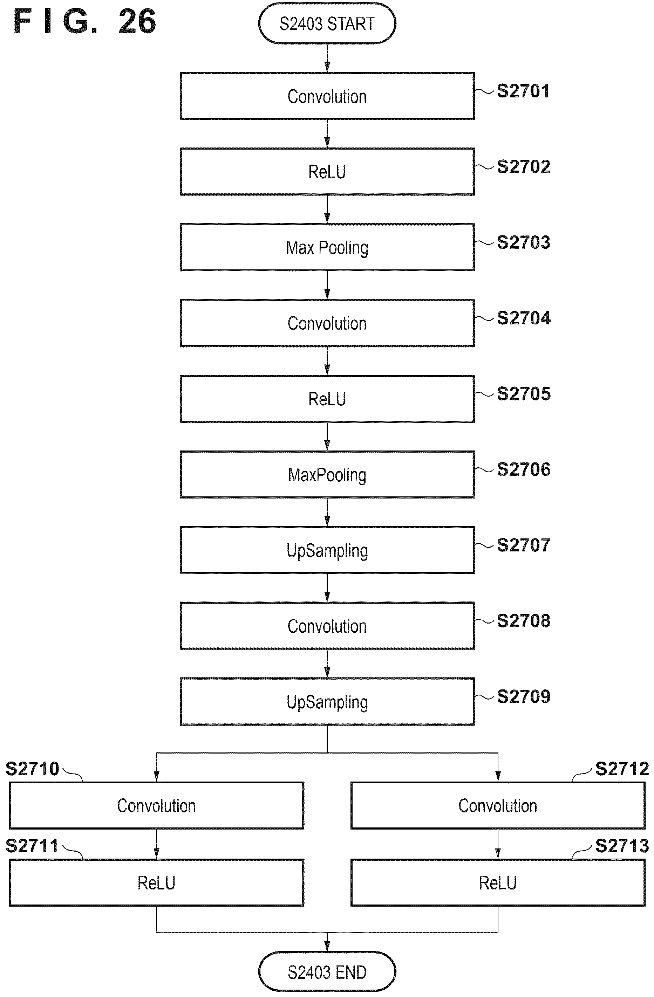

FIG. 26 is a flowchart illustrating processing by a CNN for extracting features in S2403. The CNN may be a CNN for noise reduction. The feature extraction unit 404 executes the Convolution in S2701, the ReLU in S2702, and the Max Pooling in S2703 to extract features while lowering the resolution in the spatial direction. The feature extraction unit 404 executes the Convolution in S2704, the ReLU in S2705, and the Max Pooling in S2706 to extract features while further lowering the resolution in the spatial direction. Thereafter, the feature extraction unit 404 increases the resolution by the UpSampling in S2707. Thereafter, the feature extraction unit 404 extracts features through the Convolution in S2708 and the UpSampling in S2709.

Thereafter, the feature extraction unit 404 executes the Convolution in S2710 and the ReLU in S2711 to extract features. The feature extraction unit 404 executes the Convolution in S2712 different from the Convolution in S2710 and the ReLU in S2713 different from the ReLU in S2711 to extract features. Thereby, the feature extraction unit 404 outputs two types of M-bit features. The two types of features are referred to as a first feature and a second feature. Note that the feature extraction unit 404 may output three or more types of features, and the output of the feature extraction unit 404 may be changed as appropriate.

Next, in S2404, the bit depth extension unit 405 integrates the plurality of features obtained in S2403 and converts the bit depth by extending it.

FIG. 27 is a diagram illustrating an example of integrating features and extending the bit depth in S2404. The bit depth extension unit 405 can obtain an output of M × N bits by calculating an element-wise product of a first feature 2801 and a second feature 2802, each obtained with M bits. Here, N is the number of features for which the element-wise product is calculated. N in the present embodiment is 2. The bit depth extension unit 405 may output the output obtained with M × N bits as it is, or may convert it to K bits by bit shifting or the like and output it.

A method of performing learning for noise reduction on an image is described in detail in Non-Patent Document 3 (Non-Patent Document 3: Liangyu Chen and 4 others, "Simple Baseline for Image Restoration", In: arXiv 2022).

### Effects of Second Embodiment

In the second embodiment, a plurality of features output from the feature extraction unit 404 are integrated using an element-wise product or the like. Thereby, the second embodiment makes it possible to convert the bit depth without separating the upper bits and the lower bits. Therefore, even when the bit depth that can be handled by the feature extraction unit 404 is lower than the bit depth of the input image, it is possible to perform noise reduction while suppressing a decrease in accuracy.

The above-described embodiments may be combined as appropriate. When the embodiments are combined, a configuration may be adopted in which a user can select functions and the like.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An information processing apparatus comprising:
an acquiring means for acquiring a plurality of pieces of input data having a first bit depth;
a first converting means for converting the bit depth of a piece of input data to a second bit depth that is lower than the first bit depth;
a second converting means for converting the bit depth of another piece of input data to the second bit depth, and extract features from data obtained by integrating the piece of data whose bit depth is converted to the second bit depth and the other piece of input data whose bit depth is converted to the second bit depth; and
an extending means for extending the bit depth of the features to a third bit depth that is higher than the second bit depth.

2. The information processing apparatus according to claim 1,
wherein bit depth conversion is performed using a first non-linear transformation.

3. The information processing apparatus according to claim 1, trained based on an output which is the features whose bit depth is extended to the third bit depth and a preset ground truth.

4. The information processing apparatus according to claim 1,
wherein the features are decomposed and integrated in a channel direction.

5. The information processing apparatus according to claim 4,
wherein the features are integrated by calculating an element-wise product of the decomposed features.

6. The information processing apparatus according to claim 4,
wherein a second non-linear transformation is applied to the decomposed features.

7. The information processing apparatus according to claim 6,
wherein the bit depth of the features is extended by calculating an element-wise sum of the features to which the second non-linear transformation is applied.

8. The information processing apparatus according to claim 7,
wherein the bit depth of the features is converted to the third bit depth by a first non-linear transformation that is an inverse transformation of the second non-linear transformation.

9. The information processing apparatus according to claim 1, having parameters generated through learning.

10. The information processing apparatus according to claim 1,
wherein the plurality of pieces of input data are integrated by any one of: concatenation of the plurality of pieces of input data in a channel direction; concatenation of the plurality of pieces of input data in a spatial direction; and concatenation by element-wise summation of the plurality of pieces of input data.

11. The information processing apparatus according to claim 1,
wherein a plurality of pieces of input data with different bit depths are acquired.

12. The information processing apparatus according to claim 11,
the bit depths of the plurality of pieces of input data are unified by bit depth conversion.

13. The information processing apparatus according to claim 1,
wherein a plurality of pieces of input data including a captured image of a subject are acquired, and
information regarding defocus ranges of the subject is output.

14. The information processing apparatus according to claim 13,
wherein the bit depth of the features regarding the defocus ranges of parts of the subject is extended and output.

15. The information processing apparatus according to claim 1,
wherein a plurality of pieces of input data including a first piece of input data and a second piece of input data having a higher bit depth than the first piece of input data are acquired, and
the bit depth of the second piece of input data is converted.

16. The information processing apparatus according to claim 1,
wherein the bit depth of one or more pieces of input data among the plurality of pieces of input data is converted using a plurality of types of conversions different from each other.

17. An information processing method comprising:
acquiring a plurality of pieces of input data having a first bit depth;
converting the bit depth of a piece of input data to a second bit depth that is lower than the first bit depth;
converting the bit depth of another piece of input data to the second bit depth, and extract features from data obtained by integrating the piece of data whose bit depth is converted to the second bit depth and the other piece of input data whose bit depth is converted to the second bit depth; and
extending the bit depth of the features to a third bit depth that is higher than the second bit depth.

18. A non-transitory computer-readable storage medium storing a computer program that, when read and executed by a computer, causes the computer to carry out the information processing method of claim 17.

19. A computer program comprising instructions which, when the program is executed by a computer, cause the computer to carry out the information processing method of claim 17.
